# EUROPEAN PATENT APPLICATION

(11) **EP 4 582 952 A1**
(43) Date of publication of application: **09.07.2025**
(21) Application number: 24204830.4
(22) Date of filing: 04.10.2024
(51) Int. Cl.: G06F 9/54

(54) **INTER-PROCESS DATA TRANSMISSION METHOD AND APPARATUS, ELECTRONIC DEVICE, AND STORAGE MEDIUM**

(30) Priority: 03.01.2024 CN 202410010223
(71) Applicant: Beijing Volcano Engine Technology Co., Ltd., Beijing 100190 (CN)
(72) Inventor: HUANG, Zijing, Beijing, 100028 (CN); YANG, Fan, Beijing, 100028 (CN)
(74) Representative: Dentons UK and Middle East LLP

(57) **Abstract**

Embodiments of the present disclosure provide an inter-process data transmission method and apparatus, an electronic device, and a storage medium. After a local inter-process communication connection is created for a first program process and a second program process, a data stream identifier is obtained through the first program process. Target data is written into a data buffer of a shared memory through the first program process, and a first read/write status value is written into a target location of a first bitmap field of the shared memory based on the data stream identifier after the target data is written, where the target location is determined based on the data stream identifier. Busy-wait polling detection is performed on the first bitmap field of the shared memory through the second program process. If the first read/write status value is detected at the target location of the first bitmap field, the target data output by the first program process is acquired from the data buffer. In this process, a system call is not required, thereby saving resource overheads of the system call, improving efficiency of data transmission, and reducing a waiting latency.

## Description

### TECHNICAL FIELD

Embodiments of the present disclosure relate to the field of computer technologies, and in particular, to an inter-process data transmission method and apparatus, an electronic device, and a storage medium.

### BACKGROUND

Currently, for different local processes, efficient data transmission between processes may be implemented by using a local inter-process communication technology and a shared memory technology.

However, the inter-process data transmission solution in the prior art has the problems of low data transmission efficiency and high latency.

### SUMMARY

Embodiments of the present disclosure provide an inter-process data transmission method and apparatus, an electronic device, and a storage medium, to overcome the problems of low data transmission efficiency and high latency in inter-process communication.

According to a first aspect, an embodiment of the present disclosure provides an inter-process data transmission method, including:
after a local inter-process communication connection is created for a first program process and a second program process, acquiring a data stream identifier through the first program process;
writing, through the first program process, target data into a data buffer of a shared memory, and writing a first read/write status value into a target location of a first bitmap field of the shared memory based on the data stream identifier after the target data is written, where the target location is determined based on the data stream identifier; and
performing, through the second program process, busy-wait polling detection on the first bitmap field of the shared memory, and if the first read/write status value is detected at the target location of the first bitmap field, acquiring, from the data buffer, the target data output by the first program process.

According to a second aspect, an embodiment of the present disclosure provides an inter-process data transmission apparatus, including:
an acquiring module, configured to: after a local inter-process communication connection is created for a first program process and a second program process, acquire a data stream identifier through the first program process;
a writing module, configured to: write, through the first program process, target data into a data buffer of a shared memory, and write a first read/write status value into a target location of a first bitmap field of the shared memory based on the data stream identifier after the target data is written, where the target location is determined based on the data stream identifier; and
a reading module, configured to: perform busy-wait polling detection on the first bitmap field of the shared memory through the second program process, and if the first read/write status value is detected at the target location of the first bitmap field, acquire, from the data buffer, the target data output by the first program process.

According to a third aspect, an embodiment of the present disclosure provides an electronic device, including: a processor and a memory,
where the memory stores a computer-executable instruction, and
the processor executes the computer-executable instruction stored in the memory, to enable the at least one processor to execute the inter-process data transmission method according to the first aspect and various possible designs of the first aspect.

According to a fourth aspect, an embodiment of the present disclosure provides a computer-readable storage medium, where the computer-readable storage medium stores a computer-executable instruction, and when a processor executes the computer-executable instruction, the inter-process data transmission method according to the first aspect and various possible designs of the first aspect is implemented.

According to a fifth aspect, an embodiment of the present disclosure provides a computer program product, including a computer program, and when the computer program is executed by a processor, the inter-process data transmission method according to the first aspect and various possible designs of the first aspect is implemented.

In the inter-process data transmission method and apparatus, the electronic device, and the storage medium provided in the present embodiments, after the local inter-process communication connection is created for the first program process and the second program process, the data stream identifier is obtained through the first program process; the target data is written into the data buffer of the shared memory through the first program process, and the first read/write status value is written into the target location of the first bitmap field of the shared memory based on the data stream identifier after the target data is written, where the target location is determined based on the data stream identifier; the busy-wait polling detection is performed on the first bitmap field of the shared memory through the second program process, and if the first read/write status value is detected at the target location of the first bitmap field, the target data output by the first program process is acquired from the data buffer. By writing the first read/write status value into a specified location of the first bitmap field in the shared memory after the target data to be sent is written into the shared memory by the first program process, to trigger the data acquiring operation of the second program process, data sending is implemented. In this process, a system call is not required, thereby saving resource overheads of the system call, improving efficiency of data transmission, and reducing a waiting latency.

### BRIEF DESCRIPTION OF DRAWINGS

In order to more clearly describe the technical solutions in the embodiments of the present disclosure or the prior art, the following briefly describes the accompanying drawings required for describing the embodiments or the prior art. Apparently, the accompanying drawings in the following description show some embodiments of the present disclosure, and a person of ordinary skill in the art may still derive other drawings from these accompanying drawings without creative efforts.
FIG. 1 is an application scenario diagram of an inter-process data transmission method according to an embodiment of the present disclosure.
FIG. 2 is a schematic diagram of a process of inter-process data transmission by using a shared memory according to an embodiment of the present disclosure.
FIG. 3 is a first schematic flowchart of an inter-process data transmission method according to an embodiment of the present disclosure.
FIG. 4 is a flowchart of a specific implementation of step S101 in the embodiment shown in FIG. 3.
FIG. 5 is a flowchart of a specific implementation of step S 102 in the embodiment shown in FIG. 3.
FIG. 6 is a schematic diagram of a shared memory according to an embodiment of the present disclosure.
FIG. 7 is a schematic diagram of writing into a bitmap field of a shared memory according to an embodiment of the present disclosure.
FIG. 8 is a second schematic flowchart of an inter-process data transmission method according to an embodiment of the present disclosure.
FIG. 9 is a flowchart of a specific implementation of step S209 in the embodiment shown in FIG. 8.
FIG. 10 is a block diagram of a structure of an inter-process data transmission apparatus according to an embodiment of the present disclosure.
FIG. 11 is a schematic diagram of a structure of an electronic device according to an embodiment of the present disclosure.
FIG. 12 is a schematic diagram of a hardware structure of an electronic device according to an embodiment of the present disclosure.

### DESCRIPTION OF EMBODIMENTS

To make the objectives, technical solutions, and advantages of the embodiments of the present disclosure clearer, description is made hereunder clearly and comprehensively to the technical solutions in the embodiments of the present disclosure with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

It should be noted that user information (including but not limited to user device information and user personal information) and data (including but not limited to data used for analysis, data used for storage, and data used for presentation) involved in the present disclosure are information and data authorized by users or fully authorized by all parties, and the collection, use, and processing of relevant data need to comply with relevant laws, regulations, and standards of relevant countries and regions, and corresponding operation entrances are provided for users' selection of authorization or refusal.

The following describes an application scenario of this embodiment of the present disclosure:

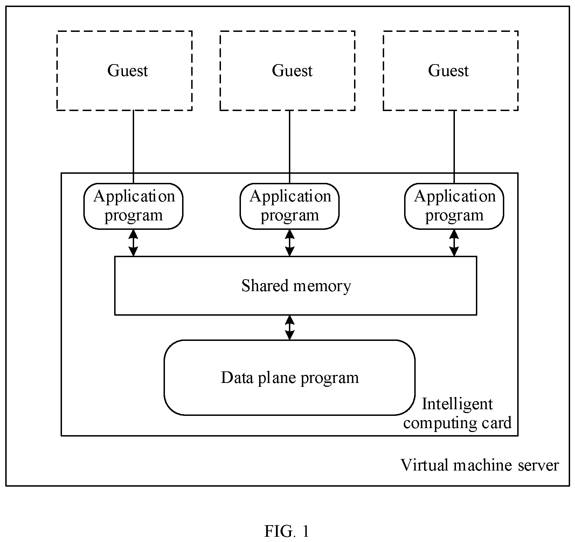

FIG. 1 is an application scenario diagram of an inter-process data transmission method according to an embodiment of the present disclosure. The inter-process data transmission method provided in this embodiment of the present disclosure may be applied to a data processing unit (DPU) chip or an intelligent computing card including the data processing unit chip. More specifically, the inter-process data transmission method may be applied to a process in which information is controlled to be exchanged between local application processes in a host under a virtual machine application scenario. An execution subject of this embodiment may be a virtual machine server (that is, a host) on which the intelligent computing card or the data processing unit chip is installed, or another electronic device that performs a similar function. With reference to FIG. 1, the virtual machine server is used as an example. The virtual machine server creates a plurality of guests by using a virtualization technology, and provides support for running of the guests by using a computing resource of the virtual machine server. Further, an intelligent computing card including a data processing unit chip is mounted on the virtual machine server. A data plane program for performing a data processing task and a plurality of application programs corresponding to the guests run in the intelligent computing card. When a guest needs to execute a specific function of an application program, the application program is controlled by the intelligent computing card to establish process communication with the data plane program, data transmission is implemented by using a shared memory, and a data processing process is completed by the data plane program in the intelligent computing card, and a processing result is returned to the application program.

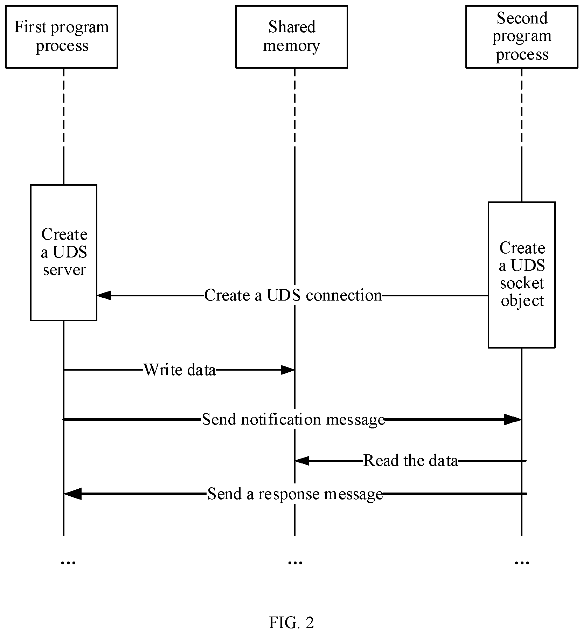

In the related art, Unix domain socket (UDS) protocol implemented by using a socket interface that is based on a Linux system may be used to implement local inter-process communication that is based on a UDS message. FIG. 2 is a schematic diagram of a process of inter-process data transmission by using a shared memory according to an embodiment of the present disclosure. As shown in FIG. 2, exemplarily, the application program corresponds to a first program process, the data plane program corresponds to a second program process, and both the first program process and the second program process are provided by the data processing unit (DPU). Specifically, main steps include the following: first, the first program process creates a UDS server by calling a socket interface, and listens to a specified address of the shared memory; the second program process creates a UDS socket by using a socket interface, and connects to the specified address listened to by the first program process, to create a UDS connection. After that, when the first program process needs to send data, the data is written into the shared memory, and then a notification message is sent through the UDS connection. After receiving the notification message, the second program process reads the data from the shared memory, and after the reading is completed, returns a response message to the first program process to notify the first program process that the data has been received (by the second program process). Further, after receiving the response message, the first program process continues to perform the next round of data sending.

Taking the related art described above as an example, in a process during which a local inter-process data transmission is performed between the application program and the data plane program by using the shared memory, a notification message and a response message are usually delivered between different application program processes by means of a system call (syscall) after data to be transmitted is written into the shared memory. This results in a problem of line blocking and low thread utilization since the next step can be performed only after a reception complete response message is returned by the other side following each transmission of the notification message by one side, thereby resulting in low data transmission efficiency and high latency in the data transmission process between threads.

An embodiment of the present disclosure provides an inter-process data transmission method to solve the above problems.

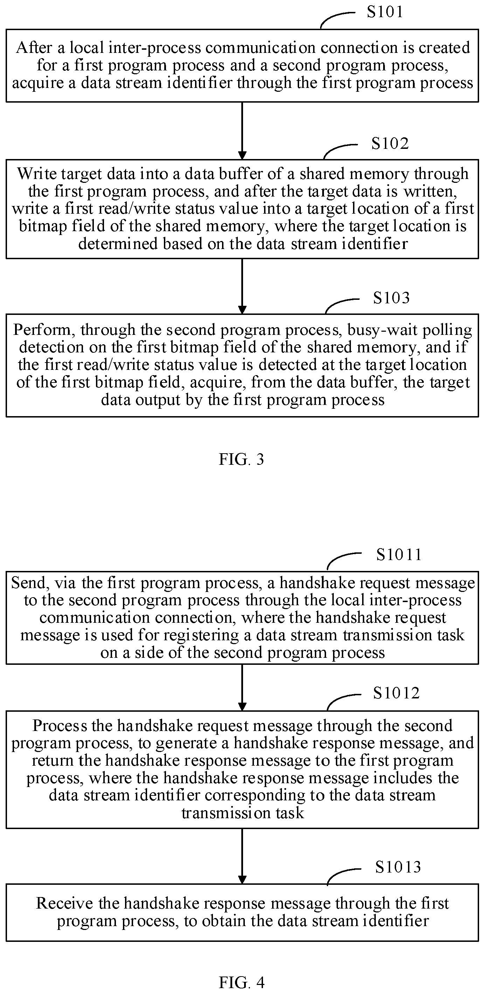

With reference to FIG. 3, FIG. 3 is a first schematic flowchart of an inter-process data transmission method according to an embodiment of the present disclosure. The method in this embodiment may be applied to an intelligent computing card. The inter-process data transmission method includes the following steps.

Step S101: After a local inter-process communication connection is created for a first program process and a second program process, obtain a data stream identifier through the first program process.

Exemplarily, with reference to the schematic diagram of the application scenario shown in FIG. 1 and the schematic diagram of the process shown in FIG. 2, the first program process is, for example, a process corresponding to an application program, and the second program process is, for example, a process corresponding to a data plane program that implements a specific data processing function. First, the first program process and the second program process that run in the intelligent computing card connect to the local inter-process communication connection based on a local inter-process communication protocol, for example, the UDS protocol, and perform an initialization handshake after the local inter-process communication connection is established, so that the first program process obtains a data stream identifier, where the data stream identifier corresponds to a data stream transmission task to be performed subsequently.

A process in which the first program process and the second program process create the local inter-process communication connection is first described below. Exemplarily, first, the first program process creates a memory file descriptor (memfd) by calling an shm_open method in a Linux system, and maps a piece of shared memory by calling an mmap method based on the memory file descriptor. After that, the first program process creates a UDS server by calling a socket interface, and listens to a specified address of the shared memory; and the second program process creates a UDS socket by using a socket interface, and connects to the specified address listened to by the first program process, to create a UDS connection. After the UDS connection is created, the first application process sends the memory file descriptor through the UDS connection, and after receiving the memory file descriptor, the second application process calls the mmap method based on the memory file descriptor to map the same piece of shared memory.

Further, after the first program process and the second program process create the local inter-process communication connection, an initialization handshake is performed on the first program process and the second program process, so that the first program process obtains the data stream identifier. Exemplarily, as shown in FIG. 4, a specific implementation of obtaining the data stream identifier through the first program process in step S101 includes the following steps.

Step 51011: Send, via the first program process, a handshake request message to the second program process through the local inter-process communication connection, where the handshake request message is used for registering a data stream transmission task on a side of the second program process.

Step S1012: Process the handshake request message through the second program process, to generate a handshake response message, and return the handshake response message to the first program process, where the handshake response message includes the data stream identifier corresponding to the data stream transmission task.

Step S1013: Receive the handshake response message through the first program process, to obtain the data stream identifier.

Exemplarily, first, the first program process sends the handshake request message to the second program process through the local inter-process communication connection (that is, the UDS connection) that is previously established. After receiving the handshake request message, the second program process reads information in the handshake request message, and performs application processing to register the data stream transmission task. Specifically, for example, the second program process processes the information in the handshake request message and registers the data stream transmission task in the following specific manner: a plurality of message fields and variables related to the first program process and/or the data stream transmission task to be performed are declared in the handshake request message; after that, the second program process fills in corresponding control information based on the message fields in the handshake request message, to generate a response message, and meanwhile completes configuration of the data stream transmission task, so as to implement the purpose of registering the data stream transmission task. The response message includes the data stream identifier corresponding to the data stream transmission task, and the data stream identifier is used for indicating a data stream of target data that is submitted by the first program process to the second program process for processing in the data stream transmission task.

Further, the second program process returns the handshake response message including the data stream identifier to the first program process. After receiving the handshake response message, the first program process parses the handshake response message, and can obtain the data stream identifier. Up to now, the initialization handshake process ends, and the first program process obtains the data stream identifier returned by the second program process. Subsequently, read/write of the shared memory is performed based on the data stream identifier. Because the read/write of the shared memory is performed based on the data stream identifier by using a mapping relationship between the data stream identifier and the data stream transmission task, parallel data transmission on a data stream basis is implemented, and data transmission efficiency is improved.

Further, the handshake request message and the handshake response message may further include other information required for registering the data stream transmission task. For example, the handshake request message includes a first request field and/or a second request field, the first request field is used for determining program version information of the second program process adapted to the first program process, and the second request field is used for representing a memory space required by the data stream transmission task.

Specifically, for example, the first request field specifies a version number of a data plane program corresponding to a second application process that needs to be used by an application program corresponding to the first application process, to ensure compatibility. After a control plane message of the data plane program is updated, a new processing logic uses a new version number. If the application program uses an old version number, the data plane program still uses a processing logic of the data plane program corresponding to the old version number. The second request field specifies a size of the shared memory that needs to be used by the application program, and the data plane program allocates, for the application program, the shared memory of a corresponding size based on a value recorded in this field.

For another example, the handshake response message further includes at least one of the following: a first response field, which is used for indicating a maximum concurrency of the second program process for executing the data stream transmission task; a second response field, which is used for indicating a memory capacity of the shared memory; and a third response field, which is used for indicating the bitmap field in the shared memory corresponding to the data stream transmission task.

Specifically, the first response field is used for indicating the maximum concurrency of the data plane program for processing the data stream. When the maximum concurrency is exceeded, a data access request of the application program is queuing and waiting. The second response field is used for indicating the memory capacity of the shared memory for writing the target data, and a single data transmission amount cannot exceed the memory capacity. The third response field is used for indicating a location of the bitmap field in the shared memory corresponding to the current data stream transmission task, and a plurality of types of bitmap fields are included, for example, a first bitmap field for storing a read/write status, a second bitmap field for a close status, and the like. Functions of specific bitmap fields are described in detail in the following embodiments.

In addition, the handshake response message may further include a version field corresponding to the first request field, where a field value is consistent with a version number requested by the first request field; and a status field, which indicates a result of processing the handshake request message. Specifically, if the processing is normal and no error occurs, a field value of the status field is set to 0; or if an error occurs, the field value of the status field is set to a corresponding error code. Specific settings may be made as needed, and are not described one by one here.

Step S102: Write target data into a data buffer of a shared memory through the first program process, and write a first read/write status value into a target location of a first bitmap field of the shared memory based on the data stream identifier after the target data is written, where the target location is determined based on the data stream identifier.

Exemplarily, after the initialization handshake is completed, the first program process writes the target data, that is, the data stream corresponding to the data stream identifier, into the data buffer of the shared memory. Meanwhile, in the process of writing the target data, it is necessary to ensure that the target data cannot exceed a maximum data length specified during the initialization handshake, and the maximum data length is determined based on a field value of the second response field of the handshake response message. For details, refer to the description of the previous step.

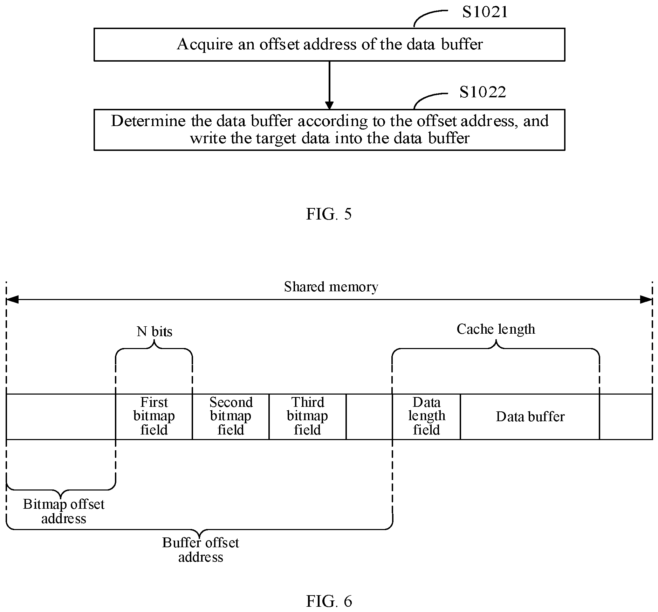

Further, in a possible implementation, as shown in FIG. 5, a specific implementation of step S102 includes the following steps.

Step S1021: Acquire an offset address of the data buffer.

Step S1022: Determine the data buffer according to the offset address, and write the target data into the data buffer.

Exemplarily, in a process of writing the target data into the data buffer of the shared memory, the first program process needs to first determine the offset address of the data buffer, that is, a buffer offset address (buffer_offset). In the process of the initialization handshake, the buffer offset address is determined by the second program process, written into the handshake response message, and sent to the first program process. The first program process obtains the buffer offset address based on a field value of an address field in the handshake response message. After that, a memory access address of the data buffer is determined based on the buffer offset address and a start address of the shared memory, and then the target data is written based on the memory access address.

Further, after the target data is written into the data buffer, to ensure that the second program process can accurately read the target data from the data buffer, it is necessary to ensure that the second program process can determine a data length of the target data. In a possible implementation, the method in this embodiment further includes: the first program process obtaining the data length (data_len) of the target data, and writing the data length into a data length field before the data buffer. The data length field may have a fixed automatic length, for example, k bits, so that after the offset address of the data buffer is acquired, a position of the data length field may be obtained through calculation; or the offset address of the data buffer points to the data length field, and the data buffer is located immediately after the data length field.

FIG. 6 is a schematic diagram of a shared memory according to an embodiment of the present disclosure. As shown in FIG. 6, the shared memory is provided with a first bitmap field, a second bitmap field, and a third bitmap field that are continuous. After the third bitmap field, a data length field and a data buffer that are continuous are arranged at intervals. The bitmap field has a fixed length, for example, N bits, where N is a number of the first program processes communicating with the second program process, or a maximum concurrency of the second program process. The bitmap field is located by using a bitmap offset address, a total length of the data length field and the data buffer is a cache length, and the data length field is located by using a buffer offset address. Information such as the bitmap offset address, the buffer offset address, a length of the bitmap field, a length of the data length field, and the cache length is all recorded in the handshake response message, and the first program process can obtain the information from the handshake response message.

By using the solution in the steps of this embodiment, in a subsequent step, the second program process can determine the data length of the target data by accessing the data length field, so that the target data can be quickly read from the data buffer, thereby improving efficiency of data processing.

After that, after the target data is written, the first program process continues to write the first read/write status value into the target location of the first bitmap field of the shared memory, where a bitmap area is a specific space in the shared memory, and there are a plurality of bitmap fields in the shared memory, for example, the first bitmap field mentioned in the step of this embodiment, the second bitmap field mentioned in the subsequent embodiment, and the like. Each bitmap field is composed of a plurality of bits, and each bit can store one binary number, that is, 0 or 1. Further, the first bitmap field is an area for storing a read/write status. The first read/write status value written into the first bitmap field, for example, 1, indicates that the first program process writes the target data into the data buffer of the shared memory. Correspondingly, if a second read/write status value 0 is written into the first bitmap field, it indicates that there is no valid data in the data buffer. Certainly, the first read/write status value and the second read/write status value may also be opposite, for example, the first read/write status value is 0, and the second read/write status value is 1, which can be set as needed. After that, the second program process can detect the target location, and determine whether to read data from the data buffer based on whether a status value at the target location is the first read/write status value or the second read/write status value, to achieve accurate transmission of the target data.

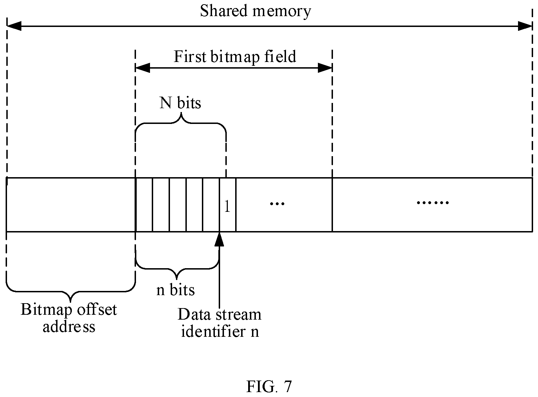

FIG. 7 is a schematic diagram of writing into a bitmap field of a shared memory according to an embodiment of the present disclosure. As shown in FIG. 7, exemplarily, the first bitmap field is arranged at a location of a bitmap offset address (bitmap_offset) of the shared memory, and the bitmap field is composed of N bits, where each bit corresponds to one data stream (data stream identifier). The n-th bit in the first bitmap field is a target location corresponding to the data stream identifier n. The first program process determines, based on the bitmap offset address and the data stream identifier n, that the target location is bitmap_offset+n, and then writes the first read/write status value (shown as 1 in the figure) into the target location of the shared memory.

Step S103: Perform, through the second program process, busy-wait polling detection on the first bitmap field of the shared memory, and if the first read/write status value is detected at the target location of the first bitmap field, acquire, from the data buffer, the target data output by the first program process.

Exemplarily, after the first program process writes the target data into the data buffer and writes the status value into the target location of the first bitmap field, the second program process listens to the first bitmap field in a busy-wait polling manner, that is, listens to all bits of the first bitmap field, to obtain status values of the bits of the first bitmap field in real time. Because, by default, for example, after the initialization handshake is completed, the status values of the bits in the first bitmap field are the second read/write status values (for example, 0), the second program process detects the second read/write status value at the target location of the first bitmap field. In this case, the second program process continues to listen in the busy-wait polling manner, but does not read data from the data buffer; until the second program process detects the first read/write status value (for example, 1) at the target location of the first bitmap field, it is equivalent to that the second program process receives a task request. At this time, the second program process reads the target data from the data buffer, where the target data is data that needs to be processed, that is, the target data output by the first program process. In this way, data exchange between the first program process and the second program process is completed.

Further, the second program process reads the data length field of the shared memory, to acquire, from the data length field of the shared memory, the target data length corresponding to the data stream identifier. After that, the second program process accurately reads corresponding data, that is, the target data, from the data buffer based on the target data length.

In the embodiments of the present disclosure, after the local inter-process communication connection is created for the first program process and the second program process, the data stream identifier is obtained through the first program process; the target data is written into the data buffer of the shared memory through the first program process, and the first read/write status value is written into the target location of the first bitmap field of the shared memory based on the data stream identifier after the target data is written, where the target location is determined based on the data stream identifier; the busy-wait polling detection is performed on the first bitmap field of the shared memory through the second program process, and if the first read/write status value is detected at the target location of the first bitmap field, the target data output by the first program process is acquired from the data buffer. By writing the first read/write status value into a specified location of the first bitmap field in the shared memory after the target data to be sent is written into the shared memory by the first program process, to trigger the data acquiring operation of the second program process, data sending is implemented. In this process, a system call is not required, thereby saving resource overheads of the system call, improving efficiency of data transmission, and reducing a waiting latency.

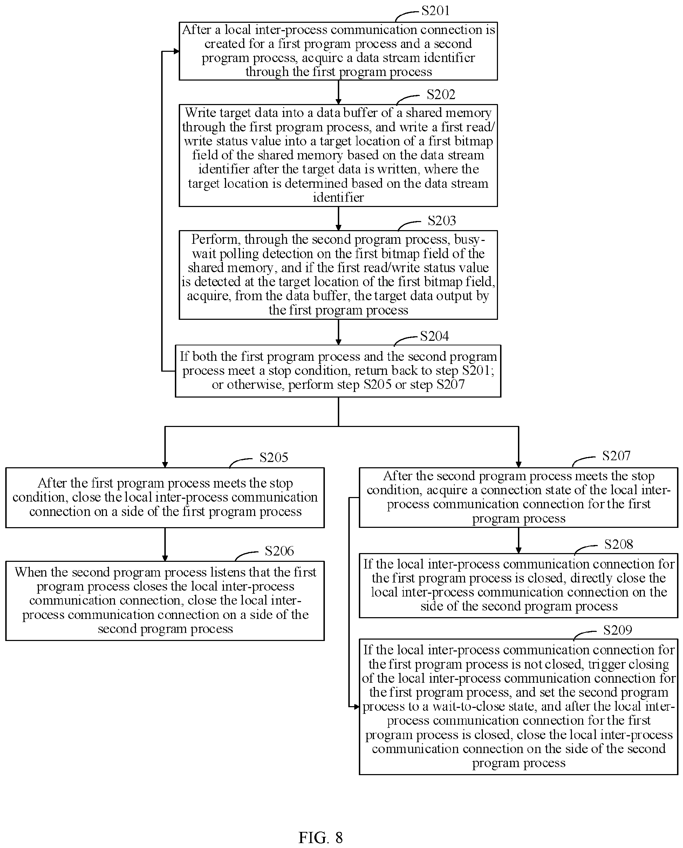

With reference to FIG. 8, FIG. 8 is a second schematic flowchart of an inter-process data transmission method according to an embodiment of the present disclosure. On the basis of the embodiment shown in FIG. 2, this embodiment further adds a processing step after a process is disconnected. The inter-process data transmission method includes the following steps.

Step S201: After a local inter-process communication connection is created for a first program process and a second program process, obtain a data stream identifier through the first program process.

Step S202: Write target data into a data buffer of a shared memory through the first program process, and write a first read/write status value into a target location of a first bitmap field of the shared memory based on the data stream identifier after the target data is written, where the target location is determined based on the data stream identifier.

Step S203: Perform, through the second program process, busy-wait polling detection on the first bitmap field of the shared memory, and if the first read/write status value is detected at the target location of the first bitmap field, acquire, from the data buffer, the target data output by the first program process.

Step S204: If both the first program process and the second program process meet a stop condition, return back to step S201; or otherwise, perform step S205 or step S207.

Step S205: After the first program process meets the stop condition, close the local inter-process communication connection on a side of the first program process.

Step S206: When the second program process listens that the first program process closes the local inter-process communication connection, close the local inter-process communication connection on a side of the second program process.

Exemplarily, the stop condition of the first program process referred to in the step of this embodiment includes that the first program process is abnormally ended or the first program process is closed in response to an instruction, where the first program process being closed in response to the instruction includes that the first program process is closed in response to a user instruction or is closed based on program logic. For example, after the application program has no data sending requirement or the data sending task ends, execute a close instruction to end the first program process, and the like, which will not be described one by one here. After that, if the first program process meets the stop condition, the local inter-process communication connection on a side of the first program process is closed, for example, including closing a UDS connection and closing a notify event file descriptor. The notify event file descriptor (notify eventfd) is an event file descriptor (eventfd) used for notifying the first program process that the data transmission by the second program process is completed. After completing the data stream transmission task, the second program process writes the notify event file descriptor, to convey, to the first program process, a message indicating that the data transmission is completed.

Further, because the first program process and the second program process occupy a piece of shared memory to implement the local inter-process communication connection, if the first program process meets the stop condition and the local inter-process communication connection on a side of the first program process is closed, but the second program process is still running, the second program process needs to be triggered to close the local inter-process communication connection. Specifically, after the first program process closes the local inter-process communication connection (the UDS connection), the second program process listens to an EPOLLHUP event by calling an epoll_wait method. In this case, the second program process performs a complete data stream release operation. Because the second program process does not need to perform an operation of delayed disconnection after the first program process is disconnected, an implementation of closing the local inter-process communication connection on the side of the second program process includes: sequentially performing a first release step and a second release step to close the local inter-process communication connection on the side of the second program process. The first release step is used for writing a notify event file descriptor and closing the notify event file descriptor subsequently, and the notify event file descriptor is used for notifying the first program process that data transmission by the second program process is completed. The second release step is used for setting data at target locations of all bitmap fields to a second status value, and cleaning related resources of the data stream.

Specifically, the step of closing the local inter-process communication connection on the side of the second program process includes sequentially performing the following steps: writing the notify event file descriptor, closing the notify event file descriptor, and setting n-th bits (that is, a data stream identifier corresponding to the first program process) of all bitmap fields to 0, that is, restoring all bitmap fields in the shared memory that are related to the current data stream identifier to a default state; and then cleaning other related resources for processing the data stream, to close the UDS connection.

For a case where the second program process is still writing a data stream into the data buffer after the UDS connection is closed by the first program process, because the shared memory is still held by the second program process, writing into the shared memory does not result in an error, and at the same time, for the second program process, the data buffer of the shared memory still belongs to the data stream, and no exception is caused. After that, after the second program process finishes writing into the data buffer, the second program process listens to the EPOLLHUP event by using epoll_wait, and learns that the first program process is closed, so that the data stream release step is performed, and no error or exception is caused.

Further, after the first program process meets the close condition, the method further includes: writing, through the first program process, a first application close status value into a target location of a second bitmap field of the shared memory; and the first application close status value is used for triggering closing of the local inter-process communication connection for the second program process. Specifically, in a possible implementation, when the second program process is in a wait-to-close state, after detecting the first application close status value (for example, 1) at the target location of the second bitmap field, the wait-to-close state is ended, and the closing of the local inter-process communication connection on the side of the second program process is executed. Specifically, for example, the second release step in the foregoing embodiment is performed. In this way, closing of the local inter-process communication connection for the second program process is triggered.

Step S207: After the second program process meets the stop condition, acquire a connection state of the local inter-process communication connection for the first program process.

Step S208: If the local inter-process communication connection for the first program process is closed, directly close the local inter-process communication connection on the side of the second program process.

Step S209: If the local inter-process communication connection for the first program process is not closed, trigger closing of the local inter-process communication connection for the first program process, and set the second program process to a wait-to-close state; and after the local inter-process communication connection for the first program process is closed, close the local inter-process communication connection on the side of the second program process.

In another possible case, when the second program process meets the stop condition, the local inter-process communication connection on the side of the second program process is not directly closed, but a connection state of the local inter-process communication connection for the first program process is first acquired and determined. If the local inter-process communication connection for the first program process is closed based on the connection state, the local inter-process communication connection on the side of the second program process is directly closed. An implementation of this case is similar to the implementation of step S206, and is not described again. If the local inter-process communication connection for the first program process is not closed based on the connection state, closing of the local inter-process communication connection for the first program process is first triggered, and the second program process is set to the wait-to-close state, to avoid a problem of a write error in the shared memory caused by the fact that the first program is still writing data into the shared memory but the second program process is disconnected. Later, after the local inter-process communication connection of the first program process is closed, the step of closing the local inter-process communication connection on the side of the second program process is performed.

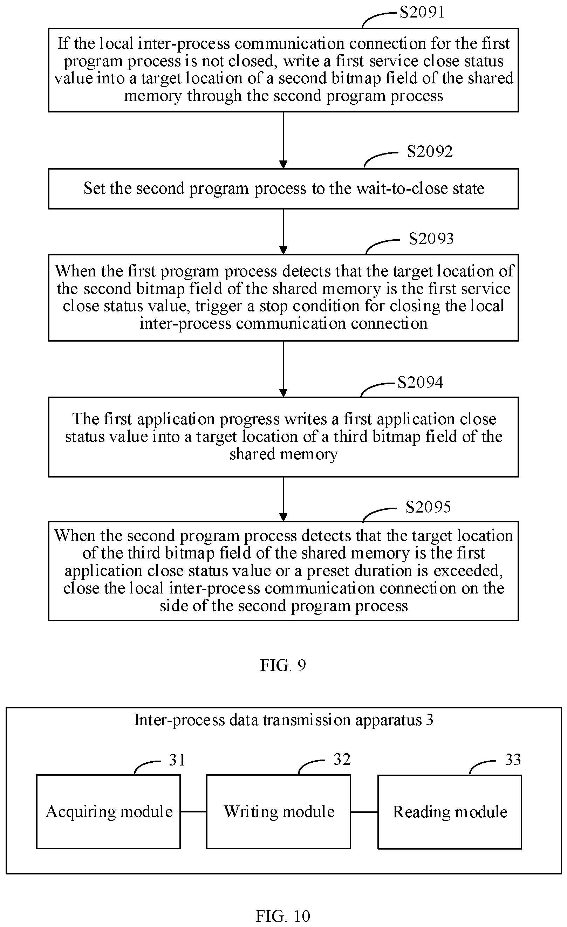

Specifically, as shown in FIG. 9, a specific implementation of step S209 includes the following steps.

Step S2091: If the local inter-process communication connection for the first program process is not closed, write, through the second program process, a first service close status value into a target location of a second bitmap field of the shared memory.

Step S2092: Set the second program process to the wait-to-close state.

Step S2093: When the first program process detects that the target location of the second bitmap field of the shared memory is the first service close status value, trigger a stop condition for closing the local inter-process communication connection.

Step S2094: The first program process writes a first application close status value into a target location of a third bitmap field of the shared memory.

Step S2095: When the second program process detects that the target location of the third bitmap field of the shared memory is the first application close status value or a preset duration is exceeded, close the local inter-process communication connection on the side of the second program process.

Exemplarily, first, similar to the meaning in the steps of the foregoing embodiment, the target location corresponds to the data stream identifier, and is used for indicating a location in a bitmap field corresponding to a currently processed data stream (data stream transmission task). The second bitmap field is a bitmap field for recording a service close status of a second application thread (corresponding to the data plane program). When a field value of the second bitmap field is the first service close status value (for example, 1), it indicates that the local inter-process communication for the second application thread has been disconnected or needs to be disconnected. After the second program process writes the first service close status value into the target location of the second bitmap field of the shared memory, the first program process monitors the target location of the second bitmap field. After monitoring the first service close status value, the stop condition for closing the local inter-process communication connection is triggered, so as to perform the step of closing the local inter-process communication connection on the side of the first program process in the foregoing embodiment (step S205). After that, the first program process writes the first application close status value into the target location of the third bitmap field of the shared memory. The third bitmap field is a bitmap field for recording an application close status of a first application thread (corresponding to the application program). When the first application close status value (for example, 1) is written into the target location of the third bitmap field, it indicates that the local inter-process communication for the first program process has been disconnected or needs to be disconnected. Correspondingly, after the second program process monitors that the target location of the third bitmap field is the first application close status value, the second program process switches from the current wait-to-close state to an execution state, and performs the step of closing the local inter-process communication connection on the side of the second program process. Optionally, after the switch to the execution state, the second program process performs the second release step in the foregoing embodiment, and the first release step is synchronously performed when step S2091 is performed, that is, the second program process writes the notify event file descriptor and closes the notify event file descriptor subsequently, while writing the first service close status value into the target location of the second bitmap field of the shared memory.

In this embodiment, the close status of the first program process and the close status of the second program process are marked by using the second bitmap field and the third bitmap field, so that after one of the first program process and the second program process disconnects the local inter-process communication connection, the other one is triggered to perform the step of disconnecting the local inter-process communication connection. By setting the wait-to-close state for the second program process, priority of the disconnection of the first program process is ensured, so that a write error in the shared memory is avoided, and system stability is improved.

In this embodiment, implementations of steps S201 to S203 are the same as those of steps S101 to S 103 in the embodiment shown in FIG. 2 of the present disclosure, and are not described here again one by one.

Corresponding to the inter-process data transmission method in the foregoing embodiment, FIG. 10 is a block diagram of a structure of an inter-process data transmission apparatus according to an embodiment of the present disclosure. For ease of description, only parts related to the embodiments of the present disclosure are shown. Referring to FIG. 10, an inter-process data transmission apparatus 3 includes:
an acquiring module 31, configured to acquire a data stream identifier through a first program process after a local inter-process communication connection is created for the first program process and a second program process;
a writing module 32, configured to write target data into a data buffer of a shared memory through the first program process, and write a first read/write status value into a target location of a first bitmap field of the shared memory based on the data stream identifier after the target data is written, where the target location is determined based on the data stream identifier; and
a reading module 33, configured to perform busy-wait polling detection on the first bitmap field of the shared memory through the second program process, and if the first read/write status value is detected at the target location of the first bitmap field, acquire, from the data buffer, the target data output by the first program process.

According to one or more embodiments of the present disclosure, when acquiring the data stream identifier through the first program process, the acquiring module 31 is specifically configured to: send, via the first program process, a handshake request message to the second program process through the local inter-process communication connection, where the handshake request message is used for registering a data stream transmission task on a side of the second program process; process the handshake request message through the second program process, to generate a handshake response message, and return the handshake response message to the first program process, where the handshake response message includes the data stream identifier corresponding to the data stream transmission task; and receive the handshake response message through the first program process, to obtain the data stream identifier.

According to one or more embodiments of the present disclosure, the handshake request message includes a first request field and/or a second request field, the first request field is used for determining program version information of the second program process adapted to the first program process, and the second request field is used for representing a memory space required by the data stream transmission task.

According to one or more embodiments of the present disclosure, the handshake response message further includes at least one of the following: a first response field, which is used for indicating a maximum concurrency of the second program process for executing the data stream transmission task; a second response field, which is used for indicating a memory capacity of the shared memory; and a third response field, which is used for indicating the bitmap field in the shared memory corresponding to the data stream transmission task.

According to one or more embodiments of the present disclosure, when writing the target data into the data buffer of the shared memory through the first program process, the writing module 32 is specifically configured to: acquire an offset address of the data buffer; and determine the data buffer according to the offset address, and write the target data into the data buffer.

According to one or more embodiments of the present disclosure, the writing module 32 is further configured to: acquire a data length of the target data; and write the data length into a data length field before the data buffer. The reading module 33, when acquiring, from the data buffer, the target data output by the first program process, and acquiring, from the data buffer, the target data output by the first program process, is configured to: acquire, from the data length field of the shared memory, a target data length corresponding to the data stream identifier; and read the data buffer based on the target data length, to obtain the target data.

According to one or more embodiments of the present disclosure, the writing module 32 is further configured to: after the first program process meets a stop condition, close the local inter-process communication connection on a side of the first program process; and the reading module 33 is further configured to: when the second program process listens that the first program process closes the local inter-process communication connection, close the local inter-process communication connection on a side of the second program process.

According to one or more embodiments of the present disclosure, when closing the local inter-process communication connection on the side of the second program process, the reading module 33 is specifically configured to: sequentially perform a first release step and a second release step to close the local inter-process communication connection on the side of the second program process, where the first release step is used for writing a notify event file descriptor and closing the notify event file descriptor subsequently, and the notify event file descriptor is used for notifying the first program process that data transmission by the second program process is completed; and the second release step is used for setting data at target locations of all bitmap fields to a second status value, and cleaning related resources of the data stream.

According to one or more embodiments of the present disclosure, before the local inter-process communication connection on the side of the first program process is closed, the writing module 32 is further configured to: write a first application close status value into a target location of a second bitmap field of the shared memory through the first program process; and the first application close status value is used for triggering closing of the local inter-process communication connection for the second program process.

According to one or more embodiments of the present disclosure, the reading module 33 is further configured to: after the second program process meets a stop condition, acquire a connection state of the local inter-process communication connection for the first program process; if the local inter-process communication connection for the first program process is closed, directly close the local inter-process communication connection on a side of the second program process; or if the local inter-process communication connection for the first program process is not closed, trigger closing of the local inter-process communication connection for the first program process, and set the second program process to a wait-to-close state; and after the local inter-process communication connection for the first program process is closed, close the local inter-process communication connection on a side of the second program process.

According to one or more embodiments of the present disclosure, when triggering the closing of the local inter-process communication connection for the first program process, the reading module 33 is specifically configured to: write a first service close status value into a target location of a second bitmap field of the shared memory through the second program process; when the first program process detects that a target location of a second bitmap field of the shared memory is the first service close status value, trigger a stop condition for closing the local inter-process communication connection, and write a first application close status value into a target location of a third bitmap field of the shared memory; and when closing the local inter-process communication connection on the side of the second program process after the local inter-process communication connection for the first program process is closed, the reading module 33 is specifically configured to: when the second program process detects that the target location of the third bitmap field of the shared memory is the first application close status value or a preset duration is exceeded, close the local inter-process communication connection on a side of the second program process.

The acquiring module 31, the writing module 32, and the reading module 33 are connected in sequence. The inter-process data transmission apparatus 3 provided in this embodiment can perform the technical solution of the method embodiment; and the implementation principle and technical effect therebetween are similar, and are not described in this embodiment again.

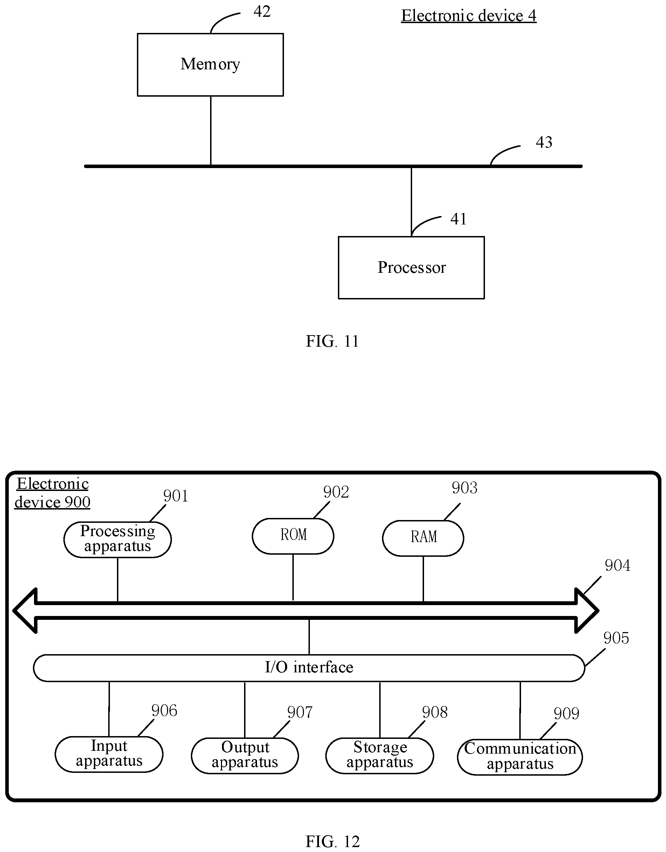

FIG. 11 is a schematic diagram of a structure of an electronic device according to an embodiment of the present disclosure. As shown in FIG. 11, the electronic device 4 includes:
a processor 41 and a memory 42 communicatively connected to the processor 41;
where the memory 42 stores computer-executable instructions; and
the processor 41 executes the computer-executable instructions stored in the memory 42, to implement the inter-process data transmission method in the embodiments shown in FIG. 2 to FIG. 9.

Optionally, the processor 41 and the memory 42 are connected through a bus 43.

For related descriptions, reference may be made to the related descriptions and effects corresponding to the steps in the embodiments corresponding to FIG. 2 to FIG. 9 for understanding, and details are not described herein again.

An embodiment of the present disclosure provides a computer-readable storage medium storing computer-executable instructions that, when executed by a processor, are configured to implement the inter-process data transmission provided in any one of the embodiments corresponding to FIG. 2 to FIG. 9 of the present disclosure.

An embodiment of the present disclosure provides a computer program product including a computer program that, when executed by a processor, implements the inter-process data transmission provided in any one of the embodiments corresponding to FIG. 2 to FIG. 9 of the present disclosure.

To implement the foregoing embodiments, an embodiment of the present disclosure further provides an electronic device.

With reference to FIG. 12, it is a schematic diagram of a structure of an electronic device 900 suitable for implementing the embodiments of the present disclosure. The electronic device 900 may be a terminal device or a server. The terminal device may include, but is not limited to, mobile terminals such as a mobile phone, a notebook computer, a digital broadcast receiver, a personal digital assistant (PDA for short), a tablet computer (Portable Android Device, PAD for short), a portable multimedia player (PMP for short), and a vehicle-mounted terminal (such as a vehicle navigation terminal), and fixed terminals such as a digital TV and a desktop computer. The electronic device shown in FIG. 12 is merely an example, and shall not impose any limitation on the function and scope of use of the embodiments of the present disclosure.

As shown in FIG. 12, the electronic device 900 may include a processing apparatus (such as a central processing unit, a graphics processing unit, and the like) 901 that may perform a variety of appropriate actions and processing in accordance with a program stored in a read-only memory (ROM for short) 902 or a program loaded from a storage apparatus 908 into a random access memory (RAM for short) 903. The RAM 903 further stores various programs and data required for the operation of the electronic device 900. The processing apparatus 901, the ROM 902, and the RAM 903 are connected to each other through a bus 904. An input/output (I/O) interface 905 is also connected to the bus 904.

Generally, the following apparatuses may be connected to the I/O interface 905: an input apparatus 906 including, for example, a touch screen, a touchpad, a keyboard, a mouse, a camera, a microphone, an accelerometer, and a gyroscope; an output apparatus 907 including, for example, a liquid crystal display (LCD for short), a speaker, and a vibrator; the storage apparatus 908 including, for example, a tape and a hard disk; and a communication apparatus 909. The communication apparatus 909 may allow the electronic device 900 to perform wireless or wired communication with other devices to exchange data. Although FIG. 12 shows the electronic device 900 having various apparatuses, it should be understood that it is not required to implement or have all of the shown apparatuses. It may be an alternative to implement or have more or fewer apparatuses.

In particular, according to an embodiment of the present disclosure, the process described above with reference to the flowcharts may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded from a network through the communication apparatus 909 and installed, installed from the storage apparatus 908, or installed from the ROM 902. When the computer program is executed by the processing apparatus 901, the above-mentioned functions defined in the method of the embodiment of the present disclosure are performed.

It should be noted that the above computer-readable medium described in the present disclosure may be a computer-readable signal medium, or a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

The above computer-readable medium may be contained in the above electronic device, or may exist independently without being assembled into the electronic device.

The above computer-readable medium carries one or more programs that, when executed by the electronic device, cause the electronic device to perform the method shown in the above embodiment.

The computer program code for performing the operations in the present disclosure may be written in one or more programming languages or a combination thereof, where the programming languages include an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case involving a remote computer, the remote computer may be connected to the computer of a user through any type of network, including a local area network (LAN for short) or a wide area network (WAN for short), or may be connected to an external computer (for example, connected through the Internet using an Internet service provider).

The flowcharts and block diagrams in the drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession can actually be executed substantially in parallel, or they can sometimes be executed in the reverse order, depending on a function involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules involved in the embodiments described in the present disclosure may be implemented by means of software, or may be implemented by means of hardware. The name of a module does not constitute a limitation on the module in some cases.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system on chip (SOC), a complex programmable logic device (CPLD), and the like.

In the context of the present disclosure, the machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. A more specific example of the machine-readable storage medium may include an electrical connection based on one or more wires, a portable computer disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof.

According to a first aspect, one or more embodiments of the present disclosure provide an inter-process data transmission method, including:
obtaining a data stream identifier through a first program process after a local inter-process communication connection is created for the first program process and a second program process; writing target data into a data buffer of a shared memory through the first program process, and writing a first read/write status value into a target location of a first bitmap field of the shared memory based on the data stream identifier after the target data is written, where the target location is determined based on the data stream identifier; and performing busy-wait polling detection on the first bitmap field of the shared memory by using the second program process, and if the first read/write status value is detected at the target location of the first bitmap field, acquiring, from the data buffer, the target data output by the first program process.

According to one or more embodiments of the present disclosure, the obtaining the data stream identifier through the first program process includes: sending, via the first program process, a handshake request message to the second program process through the local inter-process communication connection, where the handshake request message is used for registering a data stream transmission task on a side of the second program process; processing the handshake request message through the second program process to generate a handshake response message, and returning the handshake response message to the first program process, where the handshake response message includes the data stream identifier corresponding to the data stream transmission task; and receiving the handshake response message through the first program process, to obtain the data stream identifier.

According to one or more embodiments of the present disclosure, the handshake request message includes a first request field and/or a second request field, the first request field is used for determining program version information of the second program process adapted to the first program process, and the second request field is used for representing a memory space required by the data stream transmission task.

According to one or more embodiments of the present disclosure, the handshake response message further includes at least one of the following: a first response field, which is used for indicating a maximum concurrency of the second program process for executing the data stream transmission task; a second response field, which is used for indicating a memory capacity of the shared memory; and a third response field, which is used for indicating the bitmap field in the shared memory corresponding to the data stream transmission task.

According to one or more embodiments of the present disclosure, the writing the target data into the data buffer of the shared memory through the first program process includes: acquiring an offset address of the data buffer; and determining the data buffer according to the offset address, and writing the target data into the data buffer.

According to one or more embodiments of the present disclosure, the method further includes: acquiring a data length of the target data; and writing the data length into a data length field before the data buffer. The acquiring, from the data buffer, the target data output by the first program process includes: acquiring, from the data length field of the shared memory, a target data length corresponding to the data stream identifier; and reading the data buffer based on the target data length, to obtain the target data.

According to one or more embodiments of the present disclosure, the method further includes: after the first program process meets a stop condition, close the local inter-process communication connection on a side of the first program process; and when the second program process listens that the first program process closes the local inter-process communication connection, close the local inter-process communication connection on a side of the second program process.

According to one or more embodiments of the present disclosure, the closing the local inter-process communication connection on the side of the second program process includes: sequentially performing a first release step and a second release step to close the local inter-process communication connection on the side of the second program process, where the first release step is used for writing a notify event file descriptor and closing the notify event file descriptor subsequently, and the notify event file descriptor is used for notifying the first program process that data transmission by the second program process is completed; and the second release step is used for setting data at target locations of all bitmap fields to a second status value, and cleaning related resources of the data stream.

According to one or more embodiments of the present disclosure, before the local inter-process communication connection on the side of the first program process is closed, the method further includes: writing a first application close status value into a target location of a second bitmap field of the shared memory through the first program process; and the first application close status value is used for triggering closing of the local inter-process communication connection for the second program process.

According to one or more embodiments of the present disclosure, the method further includes: after the second program process meets a stop condition, acquire a connection state of the local inter-process communication connection for the first program process; if the local inter-process communication connection for the first program process is closed, directly close the local inter-process communication connection on a side of the second program process; or if the local inter-process communication connection for the first program process is not closed, trigger closing of the local inter-process communication connection for the first program process, and set the second program process to a wait-to-close state; and after the local inter-process communication connection for the first program process is closed, close the local inter-process communication connection on a side of the second program process.

According to one or more embodiments of the present disclosure, the triggering the closing of the local inter-process communication connection for the first program process includes: writing a first service close status value into a target location of a second bitmap field of the shared memory through the second program process; when the first program process detects that a target location of a second bitmap field of the shared memory is the first service close status value, trigger a stop condition for closing the local inter-process communication connection, and write a first application close status value into a target location of a third bitmap field of the shared memory; and the closing the local inter-process communication connection on the side of the second program process after the local inter-process communication connection for the first program process is closed includes: when the second program process detects that the target location of the third bitmap field of the shared memory is the first application close status value or a preset duration is exceeded, close the local inter-process communication connection on a side of the second program process.

According to a second aspect, one or more embodiments of the present disclosure provide an inter-process data transmission apparatus, including:
an acquiring module, configured to acquire a data stream identifier through a first program process after a local inter-process communication connection is created for the first program process and a second program process;
a writing module, configured to write target data into a data buffer of a shared memory through the first program process, and write a first read/write status value into a target location of a first bitmap field of the shared memory based on the data stream identifier after the target data is written, where the target location is determined based on the data stream identifier; and
a reading module, configured to perform busy-wait polling detection on the first bitmap field of the shared memory by using the second program process, and if the first read/write status value is detected at the target location of the first bitmap field, acquire, from the data buffer, the target data output by the first program process.

According to one or more embodiments of the present disclosure, when acquiring the data stream identifier through the first program process, the acquiring module is specifically configured to: send, via the first program process, a handshake request message to the second program process through the local inter-process communication connection, where the handshake request message is used for registering a data stream transmission task on a side of the second program process; process the handshake request message through the second program process, to generate a handshake response message, and return the handshake response message to the first program process, where the handshake response message includes the data stream identifier corresponding to the data stream transmission task; and receive the handshake response message through the first program process, to obtain the data stream identifier.

According to one or more embodiments of the present disclosure, the handshake request message includes a first request field and/or a second request field, the first request field is used for determining program version information of the second program process adapted to the first program process, and the second request field is used for representing a memory space required by the data stream transmission task.

According to one or more embodiments of the present disclosure, the handshake response message further includes at least one of the following: a first response field, which is used for indicating a maximum concurrency of the second program process for executing the data stream transmission task; a second response field, which is used for indicating a memory capacity of the shared memory; and a third response field, which is used for indicating the bitmap field in the shared memory corresponding to the data stream transmission task.

According to one or more embodiments of the present disclosure, when writing the target data into the data buffer of the shared memory through the first program process, the writing module is specifically configured to: acquire an offset address of the data buffer; and determine the data buffer according to the offset address, and write the target data into the data buffer.

According to one or more embodiments of the present disclosure, the writing module is further configured to: acquire a data length of the target data; and write the data length into a data length field before the data buffer. The reading module, when acquiring, from the data buffer, the target data output by the first program process, and acquiring, from the data buffer, the target data output by the first program process, is configured to: acquire, from the data length field of the shared memory, a target data length corresponding to the data stream identifier; and read the data buffer based on the target data length, to obtain the target data.

According to one or more embodiments of the present disclosure, the writing module is further configured to: after the first program process meets a stop condition, close the local inter-process communication connection on a side of the first program process; and the reading module is further configured to: when the second program process listens that the first program process closes the local inter-process communication connection, close the local inter-process communication connection on a side of the second program process.

According to one or more embodiments of the present disclosure, when closing the local inter-process communication connection on the side of the second program process, the reading module is specifically configured to: sequentially perform a first release step and a second release step to close the local inter-process communication connection on the side of the second program process, where the first release step is used for writing a notify event file descriptor and closing the notify event file descriptor subsequently, and the notify event file descriptor is used for notifying the first program process that data transmission by the second program process is completed; and the second release step is used for setting data at target locations of all bitmap fields to a second status value, and cleaning related resources of the data stream.

According to one or more embodiments of the present disclosure, before the local inter-process communication connection on the side of the first program process is closed, the writing module is further configured to: write a first application close status value into a target location of a second bitmap field of the shared memory through the first program process; and the first application close status value is used for triggering closing of the local inter-process communication connection for the second program process.

According to one or more embodiments of the present disclosure, the reading module is further configured to: after the second program process meets a stop condition, acquire a connection state of the local inter-process communication connection for the first program process; if the local inter-process communication connection for the first program process is closed, directly close the local inter-process communication connection on a side of the second program process; or if the local inter-process communication connection for the first program process is not closed, trigger closing of the local inter-process communication connection for the first program process, and set the second program process to a wait-to-close state; and after the local inter-process communication connection for the first program process is closed, close the local inter-process communication connection on a side of the second program process.

According to one or more embodiments of the present disclosure, when triggering the closing of the local inter-process communication connection for the first program process, the reading module is specifically configured to: write a first service close status value into a target location of a second bitmap field of the shared memory through the second program process; when the first program process detects that a target location of a second bitmap field of the shared memory is the first service close status value, trigger a stop condition for closing the local inter-process communication connection, and write a first application close status value into a target location of a third bitmap field of the shared memory; and when closing the local inter-process communication connection on the side of the second program process after the local inter-process communication connection for the first program process is closed, the reading module is specifically configured to: when the second program process detects that the target location of the third bitmap field of the shared memory is the first application close status value or a preset duration is exceeded, close the local inter-process communication connection on a side of the second program process.

According to a third aspect, one or more embodiments of the present disclosure provide an electronic device, including: at least one processor and a memory;
the memory stores computer-executable instructions; and
the at least one processor executes the computer-executable instructions stored in the memory, to enable the at least one processor to execute the inter-process data transmission method described in the first aspect and various possible designs of the first aspect.

According to a fourth aspect, one or more embodiments of the present disclosure provide a computer-readable storage medium storing computer-executable instructions that, when executed by a processor, implement the inter-process data transmission method described in the first aspect and various possible designs of the first aspect.

According to a fifth aspect, one or more embodiments of the present disclosure provide a computer program product including a computer program that, when executed by a processor, implements the inter-process data transmission method described in the first aspect and various possible designs of the first aspect.

The foregoing descriptions are merely preferred embodiments of the present disclosure and explanations of the applied technical principles. Persons skilled in the art should understand that the scope of disclosure involved in the present disclosure is not limited to the technical solutions formed by a specific combination of the foregoing technical features, and shall also cover other technical solutions formed by any combination of the foregoing technical features or equivalent features thereof without departing from the foregoing concept of disclosure, for example, a technical solution formed by replacing the foregoing features with technical features having similar functions disclosed in the present disclosure (but not limited to).

In addition, although the various operations are depicted in a specific order, it should not be understood as requiring these operations to be performed in the specific order shown or in a sequential order. Under specific circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment can also be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. An inter-process data transmission method, comprising:
after a local inter-process communication connection is created for a first program process and a second program process, acquiring (S101, S201) a data stream identifier through the first program process;
writing (S102, S202), through the first program process, target data into a data buffer of a shared memory, and writing a first read/write status value into a target location of a first bitmap field of the shared memory based on the data stream identifier after the target data is written, wherein the target location is determined based on the data stream identifier; and
performing (S103, S203), through the second program process, busy-wait polling detection on the first bitmap field of the shared memory, and if the first read/write status value is detected at the target location of the first bitmap field, acquiring, from the data buffer, the target data output by the first program process.

2. The method according to claim 1, wherein the acquiring (S101, S201) the data stream identifier through the first program process comprises:
sending (S 1011), via the first program process, a handshake request message to the second program process through the local inter-process communication connection, wherein the handshake request message is used for registering a data stream transmission task on a side of the second program process;
processing (S1012), through the second program process, the handshake request message to generate a handshake response message, and returning the handshake response message to the first program process, wherein the handshake response message comprises the data stream identifier corresponding to the data stream transmission task; and
receiving (S1013), through the first program process, the handshake response message to obtain the data stream identifier.

3. The method according to claim 2, wherein the handshake request message comprises a first request field and/or a second request field, the first request field is used for determining program version information of the second program process adapted to the first program process, and the second request field is used for representing a memory space required by the data stream transmission task.

4. The method according to claim 2, wherein the handshake response message further comprises at least one of the following:
a first response field, which is used for indicating a maximum concurrency of the second program process for executing the data stream transmission task;
a second response field, which is used for indicating a memory capacity of the shared memory; and
a third response field, which is used for indicating the bitmap field in the shared memory corresponding to the data stream transmission task.

5. The method according to claim 1, wherein the writing (S102, S202), through the first program process, the target data into the data buffer of the shared memory comprises:
acquiring (S1021) an offset address of the data buffer; and
determining (51022) the data buffer according to the offset address, and writing the target data into the data buffer.

6. The method according to claim 5, further comprising:
acquiring a data length of the target data; and
writing the data length into a data length field before the data buffer; and
the acquiring, from the data buffer, the target data output by the first program process comprises:
acquiring, from the data length field of the shared memory, a target data length corresponding to the data stream identifier; and
reading the data buffer based on the target data length to obtain the target data.

7. The method according to claim 1, further comprising:
after the first program process meets a stop condition, closing (S205) the local inter-process communication connection on a side of the first program process; and
when the second program process listens that the first program process closes the local inter-process communication connection, closing (S206) the local inter-process communication connection on a side of the second program process.

8. The method according to claim 7, wherein the closing (S205) the local inter-process communication connection on the side of the second program process comprises:
sequentially performing a first release step and a second release step to close the local inter-process communication connection on the side of the second program process,
wherein the first release step is used for writing a notify event file descriptor and closing the notify event file descriptor subsequently, and the notify event file descriptor is used for notifying the first program process that data transmission by the second program process is completed; and
the second release step is used for setting data at target locations of all bitmap fields to a second status value, and cleaning related resources of the data stream.

9. The method according to claim 7, before the closing (S205) the local inter-process communication connection on the side of the first program process, further comprising:
writing, through the first program process, a first application close status value into a target location of a second bitmap field of the shared memory, wherein the first application close status value is used for triggering closing of the local inter-process communication connection for the second program process.

10. The method according to claim 1, further comprising:
after the second program process meets a stop condition, acquiring (S207) a connection state of the local inter-process communication connection for the first program process;
if the local inter-process communication connection for the first program process is closed, directly closing (S208) the local inter-process communication connection on a side of the second program process; or
if the local inter-process communication connection for the first program process is not closed, triggering (S209) closing of the local inter-process communication connection for the first program process, and setting the second program process to a wait-to-close state; and closing the local inter-process communication connection on a side of the second program process after the local inter-process communication connection for the first program process is closed.

11. The method according to claim 10, wherein the triggering (S209) the closing of the local inter-process communication connection for the first program process comprises:
writing (S2091), through the second program process, a first service close status value into a target location of a second bitmap field of the shared memory; and
when the first program process detects that the target location of the second bitmap field of the shared memory is the first service close status value, triggering (S2093) a stop condition for closing the local inter-process communication connection, and writing (S2094) a first application close status value into a target location of a third bitmap field of the shared memory; and
the closing the local inter-process communication connection on the side of the second program process after the local inter-process communication connection for the first program process is closed comprises:
when the second program process detects that the target location of the third bitmap field of the shared memory is the first application close status value, or after a preset duration elapses, closing (S2095) the local inter-process communication connection on the side of the second program process.

12. An inter-process data transmission apparatus (3), comprising:
an acquiring module (31), configured to: after a local inter-process communication connection is created for a first program process and a second program process, acquire a data stream identifier through the first program process;
a writing module (32), configured to: write, through the first program process, target data into a data buffer of a shared memory, and write a first read/write status value into a target location of a first bitmap field of the shared memory based on the data stream identifier after the target data is written, wherein the target location is determined based on the data stream identifier; and
a reading module (33), configured to: perform busy-wait polling detection on the first bitmap field of the shared memory through the second program process, and if the first read/write status value is detected at the target location of the first bitmap field, acquire, from the data buffer, the target data output by the first program process.

13. An electronic device (4), comprising: a processor (41) and a memory (42),
wherein the memory (42) stores a computer-executable instruction; and
the processor (41) executes the computer-executable instruction stored in the memory (42), to enable the processor (41) to execute the inter-process data transmission method according to any one of claims 1 to 11.

14. A computer-readable storage medium storing a computer-executable instruction therein, wherein when a processor executes the computer-executable instruction, the inter-process data transmission method according to any one of claims 1 to 11 is implemented.

15. A computer program product, comprising a computer program, wherein when the computer program is executed by a processor, the inter-process data transmission method according to any one of claims 1 to 11 is implemented.
